# EUROPÄISCHE PATENTSCHRIFT

(11) **EP 1 239 993 B1**
(45) Veröffentlichungstag und Bekanntmachung des Hinweises auf die Patenterteilung: **19.01.2005**
(21) Anmeldenummer: 00979635.0
(22) Anmeldetag: 29.11.2000
(51) Int. Cl.: B23K 26/14

(54) **BLASVORRICHTUNG FÜR EINE LASEREINRICHTUNG**
BLOWING DEVICE FOR A LASER SYSTEM
DISPOSITIF DE SOUFFLAGE POUR SYSTEME LASER

(30) Priorität: 22.12.1999 DE 29922544 U
(43) Veröffentlichungstag der Anmeldung: 18.09.2002
(73) Patentinhaber: KUKA Schweissanlagen GmbH, 86165 Augsburg (DE)
(72) Erfinder: RIPPL, Peter, 86163 Augsburg (DE); HUBER, Rudolf, 81245 München (DE)
(74) Vertreter: Ernicke, Hans-Dieter, Dipl.-Ing.
(86) Internationale Anmeldenummer: PCT/EP2000/011928
(87) Internationale Veröffentlichungsnummer: WO 2001/045893

(56) Entgegenhaltungen:
- EP-A- 0 464 213
- WO-A-95/03911
- DE-A- 4 435 531
- JP-A- 11 090 664
- JP-A- 11 267 874
- JP-A- 11 267 876
- US-A- 4 319 120

## Beschreibung

Die Erfindung betrifft eine Blasvorrichtung für eine Lasereinrichtung mit den Merkmalen im Oberbegriff des Hauptanspruchs.

Eine solche Blasvorrichtung ist aus der Praxis bekannt. Sie kann über eine geeignete Halterung einer Laserschweißeinrichtung oder einer Lasertrenneinrichtung zugeordnet werden. Die Blasvorrichtung hat eine quer zum Laserstrahl ausgerichtete längliche Düse, die einen den Laserstrahl durchdringenden Gasstrom erzeugt. An der Unterseite hat die Düse eine Luftzuführung, die in der Nähe der Düsenöffnung mündet und über die ein Zuluftstrom im spitzen Winkel zum Gasstrom zugeführt werden kann. An der anderen Düsenseite schließt das Gehäuse des Laserkopfes dicht an.

Bei der bekannten Blasvorrichtung wird somit unterhalb des Gasstroms eine im wesentlichen parallel geführte Zuluftströmung erzeugt. Durch beide Strömungen soll ein Luftvorhang gebildet werden, der die Laseroptik vor Verschmutzung oder Beschädigung durch hochfliegende Spritzer aus der Schmelze schützen soll. Die bekannte Anordnung hat den Nachteil, dass sie einerseits mit einem großen Abstand von der Schweiß- oder Trennstelle angeordnet ist, wodurch der Gas- und Luftstrom einen relativ großen Querschnitt überdecken und schützen muß. Dies erfordert eine sehr hohe kinetische Strömungsenergie, was sich wegen der Diffusorwirkung und dem auf maximal ca. 2,5 bar begrenzten Druck nur unzureichend verwirklichen lässt. Andererseits sind die beiden Strömungen noch nicht ausreichend stabil, um einen optimalen Spritzerschutz zu gewährleisten. Ferner ergeben sich Geräuschprobleme und ein ungünstiger Platzbedarf.

Die US-A-4,319,120 zeigt eine Blasvorrichtung für eine Lasereinrichtung, bei der ein oder mehrere Schutzgasarten innerhalb einer Kanalführung zirkulieren und dabei über einen am Werkstück gebildeten Kanalspalt mit Überschall geblasen werden. Die Gaskanäle sind bis auf den erwähnten Schlitz und eine Zuführöffnung für das Schutzgas aus einem Vorratsbehälter rundum geschlossen. In der einen Ausführungsform wird ein einzelnes Schutzgas über einen einzigen geschlitzten Ringkanal umgewälzt. In der anderen Variante kommen mehrere verschiedene Schutzgase zum Einsatz, die jeweils über eigene und gegeneinander abgeschottete geschlitzte Ringkanäle zirkulieren. Umgebungsluft wird in diesen Fällen nicht zugeführt, weil sie die Schutz- und Arbeitsgase in unerwünschter Weise verdünnen würde. Die bekannte Blaseinrichtung dient der gezielten Zufuhr von Schutz- und Arbeitsgasen zur Schweiß- oder Schneidstelle am Werkstück und ist in räumlicher Nähe zu dieser Stelle angeordnet.

Die JP 11-267874 A zeigt eine Blasvorrichtung, die unterhalb es Schutzglases einer Lasereinrichtung angeordnet ist und die eine Blasdüse mit einem Auslassschlitz für einen quer zum Laserstrahl gerichteten Gasstrom aufweist. Die Gasdüse ist als Schlitz in einer vertikalen Gehäusewandung angeordnet, die sich über die Düsenöffnung hinaus noch ein Stück nach unten fortsetzt. In der einen Variante erstreckt sich die Gehäusewandung nach unten bis zu einem dortigen Schutzgaskanal. Bei dieser geschlossenen Gehäusewand kann keine Umgebungsluft zutreten. In der anderen Variante endet die Gehäusewand mit Abstand unterhalb der vorgenannten Gasdüse, so dass aus diesem Freiraum mit einigem Abstand unterhalb des Gasstroms Umgebungsluft zutreten kann. Hierbei besteht keine Führung für den Zuluftstrom, der durch diese Anordnung diffus verwirbelt wird.

Die JP-11-267876 A zeigt eine Abwandlung des vorerwähnten Standes der Technik mit einer bis auf ein oder drei Gasdüsenschlitze geschlossenen Gehäusewandung, die sich nach unten bis zu separaten Schutzgaskanälenbereich der Schweißstelle erstreckt. Bei dieser Ausführungsform kann durch die geschlossene Wandung keine Umgebungsluft zu den Gasströmen hinzutreten.

Die JP-11-090664 A offenbart einen Laserkopf mit einem Schutzglas, welches von einer ringförmigen Düse umgeben ist, wobei durch einen Ringschlitz Luft parallel zum Laserstrahl austreten kann.

Eine andere Blasvorrichtung ist aus der DE-A-44 35 531 bekannt. Hier wird ein Gasstrom entlang eines Umlenkspiegels in der Laseroptik geführt. Dies setzt eine entsprechende Ausbildung der Lasereinrichtung voraus. Der Gasstrom muß dabei auch gekrümmt werden. Eine ähnliche in die Laseroptik integrierte Blasvorrichtung mit vier getrennten Druckluftzuführungen offenbart die EP 0 464 213 A1.

Eine andere Blasvorrichtung zeigt noch die WO 95/03911, die eine geschlossene Kanalführung für den Gasstrom vorsieht und entsprechend kompliziert aufgebaut ist. Die Blasvorrichtung schränkt dadurch die konstruktiven Gestaltungsfreiheiten und die Einsatzbereiche der Lasereinrichtung empfindlich ein.

Es ist Aufgabe der vorliegenden Erfindung, eine bessere Blaseinrichtung aufzuzeigen.

Die Erfindung löst diese Aufgabe mit den Merkmalen im Hauptanspruch.
Bei der erfindungsgemäßen Blasvorrichtung wird der von der Düsenanordnung erzeugte Gasstrom an beiden Seiten eingeschlossen und geführt, wodurch Wirbelbildungen und dadurch Strömungsverluste weitestgehend vermieden werden. Die kinetische Energie und die Wegblaskraft des Gasstroms bleiben erhalten, wobei der aus physikalischen Gründen beschränkte Ausströmdruck optimal ausgenutzt wird.

Die Gasstromführung kann entweder durch zwei spitzwinkelig oder im wesentlichen parallel zusammenlaufende Zuluftströme oder durch einen solchen Zuluftstrom und ein paralleles Schutzglas erzielt werden. Diese Strömungsführung minimiert auch die Geräusche. Die Blasvorrichtung ist konstruktiv wesentlich einfacher und kostengünstiger als vorbekannte Ausführungsformen.
Außerdem kann sie an beliebig geeigneter Stelle positioniert werden und beeinflusst eine evtl. vorhandene Schutzgaszuführung für den Schweißprozeß nicht negativ.

In der bevorzugten Ausführungsform wird die Düse an einem offenen Düsenhalter angeordnet und kann dabei auch höhenverstellbar befestigt sein. Dies ermöglicht eine seitliche Zufuhr von Zuluft aus der Umgebung und eine aussenseitige Umströmung der Düse, was erfindungsgemäß in Verbindung mit der strömungsgünstigen Tropfen- oder Flügelform für die Strömungsführung besonders vorteilhaft ist. Außerdem kann die Gas- und Luftströmung in einer günstigen Höhe plaziert werden, in der der überstrichene Streu- oder Kegelquerschnitt zur Spritzerabwehr relativ klein und die vorhandene kinetische Energie der Luftströmung zum Wegblasen auch größerer Spritzer genügend groß ist. Außerdem werden durch die offene Ausbildung und Anordnung der Blasvorrichtung die anderen Bestandteile der Lasereinrichtung nicht negativ beeinflusst.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Lasereinrichtung mit einer Blasvorrichtung in Seitenansicht,
- Figur 2:: eine geklappte Seitenansicht der Anordnungen von Figur 1 entsprechend Pfeil II,
- Figur 3:: eine Draufsicht der Anordnung von Figur 1 gemäß Pfeil III und
- Figur 4 und 5:: Varianten der Düsenanordnung von Figur 1 bis 3 mit einem Schutzglas.

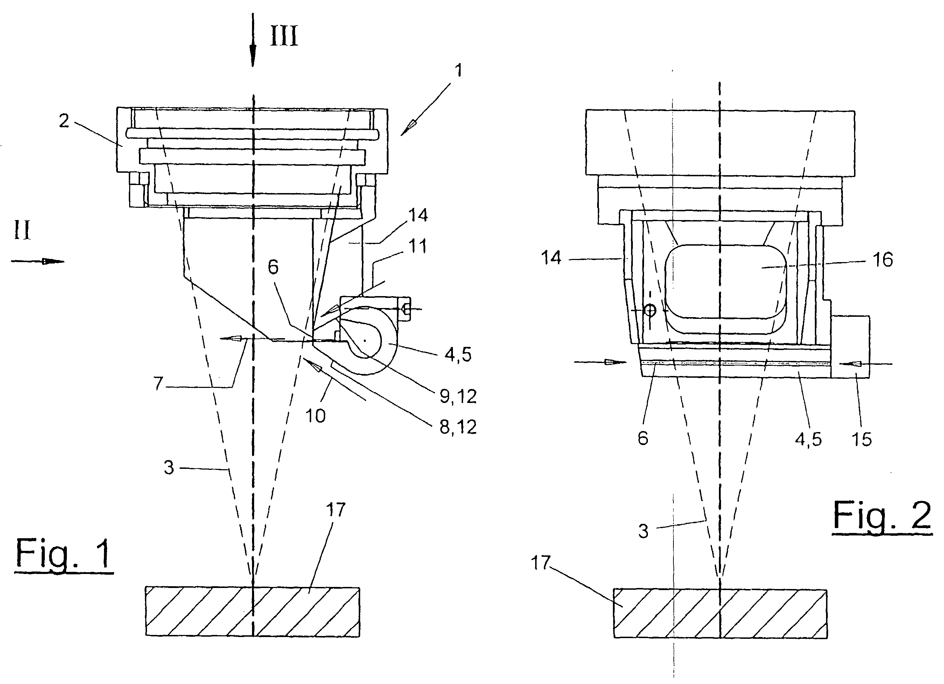

Figur 1 und 2 zeigen in zwei Seitenansichten eine Lasereinrichtung (1), die zum Schweißen oder Schneiden von schematisch dargestellten Werkstücken (17) mittels eines Laserstrahls oder eines Laserstrahlbündels (3) dient. Der Übersicht halber ist von der Lasereinrichtung (1) nur der Laserkopf (2) und der Strahl (3) dargestellt. An der Lasereinrichtung (1) ist eine Blasvorrichtung (4) angeordnet, die einen im wesentlichen quer zum Laserstrahl (3) gerichteten Gasstrom (7) erzeugt, der die darüber angeordnete Laseroptik vor Verschmutzung oder Beschädigung durch hochspringende Schweißspritzer, durch Schmauch oder andere Einflüsse aus dem Schweiß- oder Trennprozeß schützt.

Die Blasvorrichtung (4) besitzt vorzugsweise mindestens eine Düse (5), die als quer gerichteter Düsenbalken ausgebildet ist und die eine längsgerichtete seitlich schlitzförmige Düsenöffnung (6) für den Auslass des Gasstroms (7) aufweist. An den beiden Stirnenden der Düse (5) sind gegenüberliegende Druckluftanschlüsse (15) angeordnet, von denen in Figur 2 nur einer dargestellt ist. Die beidseitigen Druckluftanschlüsse (15) drücken das Gas mit gegeneinander gerichteten Einströmrichtungen axial in den hohlen Innenraum der Düse (5). Hierdurch ergibt sich ein über die Schlitzlänge der Düsenöffnung (6) weitgehend konstanter Ausblasdruck. Alternativ kann der Druckluftanschluss nur an einer Stirnseite oder hinten liegen. Das Gas (7) kann Luft oder ein beliebig anderes Gas sein.

Die Düse (5) hat im Querschnitt eine Tropfenform oder eine Flügelform und ist mittels eines offenen Düsenhalters (14) am Laserkopf (2) in einer wählbaren Höhe befestigt. Der Düsenhalter (14) hat hierzu beispielsweise ein in Figur 2 dargestelltes Fenster (16), das den Zutritt von Außenluft an die oben liegenden Außenflächen der Düse (5) ermöglicht. Die Düse (5) kann weitgehend frei schwebend gehalten werden und kann von der Umgebungsluft an der Rückseite sowie der Unter- und Oberseite umströmt werden. Der Düsenhalter (14) kann in sich höhenverstellbar ausgebildet sein oder höhenverstellbar am Laserkopf (2) befestigt sein.

In der in Figur 1 bis 3 dargestellten Ausführungsform hat die tropfenförmige Düse (5) an der Außenseite zwei schräg zur Düsenöffnung (6) hin verlaufende und dort mündende Außenwände, die als konische Luftleitflächen (12) für eine beidseitige Luftzuführung (8,9) und für beidseitig entlangfließende Zuluftströme (10,11) dienen. Die Zuluftströme (10,11) werden von dem an der Düsenöffnung (6) mit hohem Druck von ca. 2,5 bar austretenden Gasstrom (7) aus der umgebenden Außenluft angesaugt.

Die Zuluftströme (10,11) gelangen in einem spitzen Winkel zur Düsenöffnung (6) und werden dort parallel zum Gasstrom (7) umgerichtet. Die beiden Zuluftströme (10,11) betten dadurch den Gasstrom (7) zwischen sich ein und führen ihn beidseitig. Insgesamt ergibt sich hierdurch eine dreilagige im wesentlichen laminare Strömung, die eine besonders hohe Strömungsstabilität unter weitgehender Vermeidung von Verwirbelungen hat. Die kinetische Energie der Strömungen bleibt über eine größere Lauflänge erhalten, so dass die dreilagige Strömung genügend Kraft hat, um aufsteigende Spritzer, Schmauch und dergleichen vor dem Laserkopf (2) und der dort angeordneten Laseroptik wegzublasen.

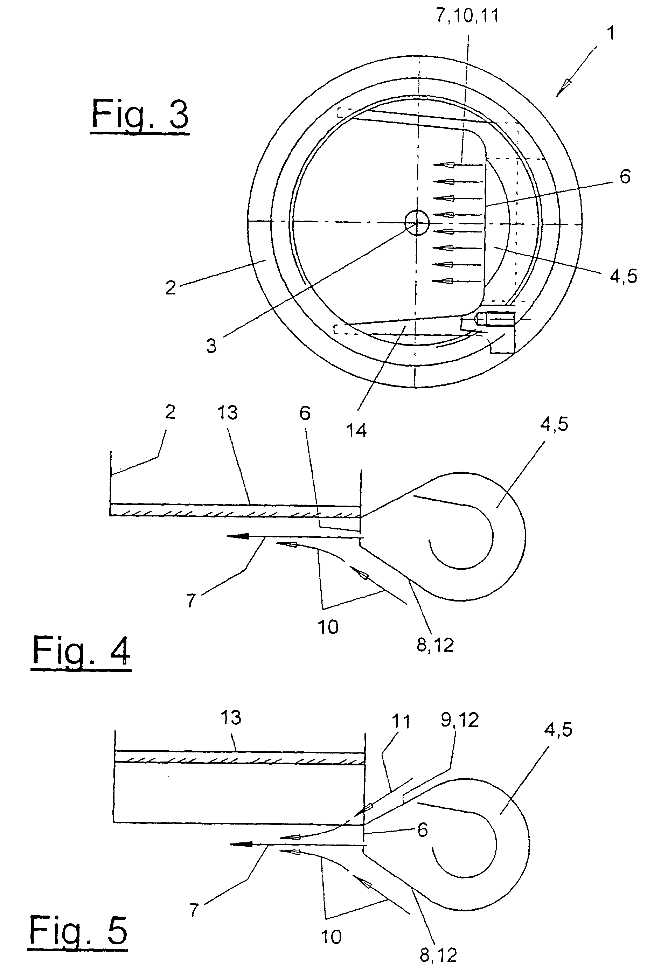

Figur 4 und 5 zeigen zwei Varianten der Ausführungsform von Figur 1 bis 3. In der Ausführung von Figur 4 ist nur der Zuluftstrom (10) an der Unterseite der Düse (5) vorhanden. Anstelle des oberen Zuluftstromes (11) befindet sich ein vorzugsweise planscheibenförmiges laserstrahldurchlässiges Schutzglas (13) über dem Gasstrom (7), das sich parallel zu diesem erstreckt und das mit seinem Rand dichtend an der Düsenöffnung (6) anschließt. Hierdurch wird der Zustrom von Zuluft auf dieser Seite verhindert. Das Schutzglas (13) ist im Laserkopf (2) oder am Düsenhalter (14) in geeigneter Weise befestigt. Es bildet anstelle des oberen Zuluftstroms (11) die obere Parallelführung für den Gasstrom (7), der dadurch zwischen der Schutzglasscheibe (13) und dem unteren Zuluftstrom (10) eingebettet und geführt ist. Das Schutzglas (13) schützt außerdem zusätzlich die Laseroptik gegen Spritzer. Es ist vorzugsweise lösbar angeordnet und kann bei Bedarf ausgetauscht werden.

In der Variante von Figur 5 sind wieder die gleichen beidseitigen konisch zur Düsenöffnung (6) zulaufenden Zuluftströme (10,11) wie in Figur 1 bis 3 vorhanden, wobei zusätzlich ein Schutzglas (13) angeordnet ist, das im Laserkopf oder im Düsenhalter (14) mit Abstand oberhalb der Düsenöffnung (6) positioniert ist. Das Schutzglas (13) hat in diesem Fall keine Führungsfunktion für den Gasstrom (7) und dient vor allem als zusätzlicher mechanischer Spritzerschutz.

Abwandlungen der gezeigten Ausführungsform sind in verschiedener Weise möglich. Zum einen kann die Außenform der Düse (5) anders ausgebildet sein. Die Luftzuführungen (8,9) können statt als offene Leitflächen (12) auch als ummantelte Strömungskanäle gestaltet sein. Ferner können zwei oder mehr Düsen (5) vorhanden sein.

### BEZUGSZEICHENLISTE

- 1: Laservorrichtung
- 2: Laserkopf
- 3: Laserstrahl
- 4: Blasvorrichtung
- 5: Düse, Düsenanordnung
- 6: Düsenöffnung, Schlitzdüse
- 7: Gasstrom
- 8: Luftzuführung
- 9: Luftzuführung
- 10: Zuluftstrom, Außenluft
- 11: Zuluftstrom, Außenluft
- 12: Luftleitfläche
- 13: Schutzglas, Schutzglasscheibe
- 14: Düsenhalter
- 15: Druckluftanschluss
- 16: Fenster
- 17: Werkstück

## Patentansprüche

1. Blasvorrichtung mit einem Düsenhalter (14) zur Montage an einer Lasereinrichtung (1) zum Trennen oder Schweißen von Werkstücken (17), wobei die Blasvorrichtung (4) mindestens eine Düsenanordnung (5) besitzt, die einen im Winkel zum Laserstrahl (3) gerichteten Gasstrom (7) erzeugt und dabei an einer Düsenseite eine in der Nähe zur Düsenöffnung (6) mündende Luftzuführung (8) für einen im wesentlichen parallel oder im spitzen Winkel zum Gasstrom (7) zugeführten Zuluftstrom (10) aufweist wobei an der anderen Düsenseite eine zweite in der Nähe zur Düsenöffnung (6) mündende Luftzuführung (9) für einen zweiten im wesentlichen parallel oder im spitzen Winkel zum Gasstrom (7) zugeführten Zuluftstrom (11) und/oder ein im wesentlichen parallel zum Gasstrom (7) gerichtetes Schutzglas (13) angeordnet ist/sind und **dadurch gekennzeichnet, dass** die Düse (5) im Querschnitt außenseitig eine Tropfen- oder Flügelform aufweist und zumindest eine von deren zur Düsenöffnung (6) schräg verlaufenden Außenflächen eine Luftleitfläche (12) bildet.

2. Blasvorrichtung nach Anspruch 1, **dadurch gekennzeichnet, dass** das Schutzglas (13) scheibenförmig ausgebildet und unmittelbar an der Düsenöffnung (6) angrenzend und abdichtend angeordnet ist.

3. Blasvorrichtung nach Anspruch 1 oder 2, **dadurch gekennzeichnet, dass** die Düse (5) an einem offenen Düsenhalter (14) angeordnet ist und an beiden Seiten von Außenluft umströmbar ist.

4. Blasvorrichtung nach Anspruch 1, 2 oder 3, **dadurch gekennzeichnet, dass** die Düse (5) höhenverstellbar am Düsenhalter (14) angeordnet ist.

5. Blasvorrichtung nach einem der Ansprüche 1 bis 4, **dadurch gekennzeichnet, dass** die Düse (5) als Düsenbalken ausgebildet ist und an den Stirnseiten zwei gegenüberliegende Druckluftanschlüsse (15) aufweist.

## Claims

1. Blowing device with a nozzle holder (14) for mounting on a laser system (1) for cutting or welding workpieces (17), the blowing device (4) having at least one nozzle arrangement (5), which generates a gas flow (7) directed at an angle to the laser beam (3) and has, on one side of the nozzle, an air feed (8), opening in the vicinity of the nozzle opening (6), for an incoming air flow (10), which is fed essentially parallel or at an acute angle to the gas flow (7), there being arranged on the other side of the nozzle a second air feed (9), opening in the vicinity of the nozzle opening (6), for a second incoming air flow (11), which is fed essentially parallel or at an acute angle to the gas flow (7), and/or a protective glass (13), which is directed essentially parallel to the gas flow (7), and **characterized in that** the nozzle (5) has a drop- or wing-shaped cross section on the outside and at least one of its outer surfaces that extend obliquely to the nozzle opening (6) forming an air-directing surface (12).

2. Blowing device according to Claim 1, **characterized in that** the protective glass (13) is designed in the form of a pane and is arranged such that it directly adjoins and seals the nozzle opening (6).

3. Blowing device according to Claim 1 or 2, **characterized in that** the nozzle (5) is arranged on an open nozzle holder (14) and outside air can flow around it on both sides.

4. Blowing device according to Claim 1, 2 or 3, **characterized in that** the nozzle (5) is arranged on the nozzle holder (14) in a height-adjustable manner.

5. Blowing device according to one of Claims 1 to 4, **characterized in that** the nozzle (5) is designed as a nozzle bar and has two opposite compressed air connections (15) on the end faces.

## Revendications

1. Dispositif de soufflage comprenant un porte-buse (14) destiné à être monté sur un dispositif laser (1) en vue du découpage ou du soudage de pièces (17), le dispositif de soufflage (4) possédant au moins un agencement de buse (5) qui produit un flux de gaz (7) orienté à un certain angle par rapport au faisceau laser (3) et présente en l'occurrence au niveau d'un côté de la buse une alimentation en air (8) débouchant à proximité de l'ouverture de la buse (6) pour un flux d'air d'amenée (10) entraîné essentiellement parallèlement ou suivant un angle aigu par rapport au flux de gaz (7), une deuxième alimentation en air (9) débouchant à proximité de l'ouverture de la buse (6) pour un deuxième flux d'air d'amenée (11) entraîné essentiellement parallèlement ou suivant un angle aigu par rapport au flux de gaz (7) et/ou un verre protecteur (13) orienté essentiellement parallèlement au flux de gaz (7) étant prévu(s) au niveau de l'autre côté de la buse, **caractérisé en ce que** la buse (5) présente, en section transversale, du côté extérieur, une forme de goutte ou d'aile et forme au moins une surface de guidage d'air (12) depuis ses faces extérieures s'étendant en biais par rapport à l'ouverture de la buse (6).

2. Dispositif de soufflage selon la revendication 1, **caractérisé en ce que** le verre protecteur (13) est réalisé en forme de vitre et est disposé de manière directement adjacente et hermétique contre l'ouverture de la buse (6).

3. Dispositif de soufflage selon la revendication 1 ou 2, **caractérisé en ce que** la buse (5) est disposée sur un porte-buse ouvert (14) et peut être parcourue des deux côtés par l'air extérieur.

4. Dispositif de soufflage selon la revendication 1, 2 ou 3, **caractérisé en ce que** la buse (5) est disposée de manière réglable en hauteur sur le porte-buse (14).

5. Dispositif de soufflage selon l'une quelconque des revendications 1 à 4, **caractérisé en ce que** la buse (5) est réalisée sous forme de barre à buse et présente, au niveau des deux côtés frontaux, deux raccords d'air sous pression (15) opposés.
